# EUROPEAN PATENT APPLICATION

(11) **EP 4 527 562 A1**
(43) Date of publication of application: **26.03.2025**
(21) Application number: 23198144.0
(22) Date of filing: 19.09.2023
(51) Int. Cl.: B25J 9/16, G05B 19/418

(54) **KNOWLEDGE-BASED AUTONOMOUS PLANNING AND EXECUTION OF PRODUCTION STEPS IN CYBER-PHYSICAL PRODUCTION SYSTEMS**

(71) Applicant: Siemens Aktiengesellschaft, 80333 München (DE)
(72) Inventor: Tabaei Befrouei, Mitra, 1030 Wien (AT); Zahorcak, Vladimir, 900 32 Borinka (SK)
(74) Representative: Siemens Patent Attorneys

(57) **Abstract**

Present invention concerns a method of operating a first autonomous production unit (302, 304, 402, 404) for a manufacturing system. The first autonomous production unit (302, 304, 402, 404) is adapted to provide a plurality of different functionalities. The method comprises determining (S10), by the first autonomous production unit (302, 304, 402, 404), a first workplan of actions to be performed by the first autonomous production unit (302, 304, 402, 404), wherein the first workplan is determined based on a domain representation and based on a problem representation.

The invention also concerns related devices.

## Description

Present invention concerns operation of manufacturing systems, in particular of autonomous production units of such systems.

### Background of the Invention

Engineering and commissioning of automatic control systems for manufacturing or handling of product are quite costly and time-consuming. Therefore, engineers and researchers have always been looking for techniques to reduce the effort required for designing, upgrading, and evolving of production systems. Standards like ISA-88 and ISA-95 propose modular design concepts and good practices to increase modularity and flexibility in manufacturing control systems. However, their guidelines remain rather high-level and unspecific.

State-of-the-art flexible engineering systems offer low-code tooling or forms of automatic motion planning to reduce the effort needed to adapt the system to produce a new product.

Traditional manufacturing control systems based on ISA-88/ISA-95 are typically designed and engineered to handle a predefined set of product variants which are usually produced in large quantities. The physical layout, the arrangement of machines, and the software to control the machines are then customized for specific production tasks. More specifically, this type of systems run production processes which are hierarchies of process or production steps describing operations by which input workpiece(s) are transformed, transported, or stored. Physical equipment entities which run the production steps are also organized into hierarchical structures. Therefore, physical entities at higher levels usually control, orchestrate, and synchronize "centrally" the operations of lower-level devices.

Although according to standards like ISA-88, equipment and process structures or models are separated, there is a correlation or mapping between hierarchical structure of physical equipment and production process (called master recipe in ISA-88 terminology).

The environment consisting of physical devices in such systems is highly structured. Devices are fully preprogrammed for specific tasks, and centrally controlled. Especially, the collaboration of several machines to do a production step requires offline programming as well as an online central synchronization. For example, if "Assemble Part1 to Part2" requires collaboration of two robots, teaching or offline programming is needed in advance.

Thus, such systems are inflexible, and require large effort to adapt to new tasks, in particularly often requiring direct involvement of a highly skilled engineer.

### Disclosure of the Invention

A problem underlying the invention consists in providing an improved technique for operating units in a manufacturing system, in particular regarding use of autonomous production units.

The invention solves the given problem by means of subject-matter defined in enclosed independent claims. Dependent claims describe preferred embodiments.

There is disclosed a method of operating a first autonomous production unit for a manufacturing system. The first autonomous production unit is adapted to provide a plurality of different functionalities. The method comprises determining, by the first autonomous production unit, a first workplan of actions to be performed by the first autonomous production unit. The first workplan is determined based on a domain representation and based on a problem representation.

This may facilitate operation of a highly dynamic manufacturing environment, e.g., using production units autonomously deciding workplans for themselves based on provided information, e.g., high-level information, which may for example describe a product and/or resources, and/or be without a workplan. In particular, a bottom-up approach of planning for a manufacturing system may be enabled, and/or direct involvement of a human engineer when planning may be avoided and/or limited. Determining a workplan may be considered a form of planning.

It may be considered that the domain representation may represent the first autonomous production unit (e.g., based on a digital twin, or in general a digital representation), and/or functionalities of the first autonomous production unit (e.g., based on behaviors and/or available actions), and/or constraints of the first autonomous production unit (e.g., movement range/s and/or load constraints and/or speed constraints), and/or may represent one or more objects (e.g., a workpiece, and/or components and/or material to be used), and/or may represent an environment, and/or one or more relations between such functionalities and/or constraints and/or objects and/or the environment. Relations may be represented by predicates, e.g., for symbolic logic and/or symbolic AI planning.

The first workplan may be determined based on a representation of a second production unit (which may be an autonomous production unit) operable to collaborate with the first autonomous production unit. The first and second production units may be associated to, and/or part of the same cell. Thus, collaboration effects and/or requirements may be considered.

A second workplan of actions for a second production unit (e.g., a production unit of the same cell, and/or a second autonomous production unit) may be determined, wherein the second production unit may be operable to collaborate with the first autonomous production unit. This determining may, for example, be performed when, or as part of, determining the first workplan. The second workplan may be provided to the second production unit, e.g., via a communication interface. In general, a workplan may be determined, which may comprise the first and second workplans, and may optionally comprise further workplans.

A workplan, e.g., the first workplan and/or second workplan, may be determined dynamically. Dynamic determination may refer to short timescale before executing the workplan, e.g., 10 minutes or less before, or 5 minutes or less before, or 1 minute or less before, or even during processing the workpiece by the first autonomous production unit and/or by the cell of the first autonomous production unit (e.g., a different production unit of the same cell).

The workplan (e.g., first workplan and/or second workplan) may be determined based on arrival of a workpiece to be handled by the first autonomous production unit and/or by an error when handling a workpiece, and/or a corresponding trigger, which may be workpiece-specific or product-specific. In some cases, the workplan may be determined based on a change of problem specification (generally also referred to as problem representation and/or problem description), and/or change of domain specification. Such change may be based on information received via a suitable interface, e.g., from the manufacturing system (e.g., a control device thereof), and/or a production unit of the same cell, or a different unit, and/or a sensor device (e.g., an internal or external sensor sensing an error and/or defect). Thus, the workplan may be adapted just in time and/or to accommodate changes in desired product or errors during processing. This may be particularly beneficial for small lot sizes, and/or to continue processing in an error case.

In general, the manufacturing system may comprise N autonomous production units, wherein N may be an integer number larger than 1, or larger than 3, or larger than 9. The manufacturing system may comprise a control device, e.g., a centralized control, which for example may provide goal updates and/or problem representation updates, and/or domain representation updates, and/or state representation updates to one or more of the production units.

The first workplan may be determined based on state information pertaining to the first autonomous production unit and/or cell and/or second production unit. The state information may be represented by a state representation, e.g., by and/or based on one or more digital twins, and/or by a problem representation, and/or by a domain representation. In general, state information pertaining to a unit or cell may indicate current state information, e.g., position/s and/or movement/s and/or load/s and/or setting/s of the product unit and/or cell. Thus, determining the workplan may consider current status, and/or may be performed dynamically, in line with a current situation.

The first autonomous production unit (and/or the second production unit) may in general be associated to a cell of M different production units, which may be operable to collaborate at least pairwise. M may be an integer number larger than 1. Pairwise cooperation may indicate that for each production unit of the cell, there is at least one other production unit available for collaboration. Collaboration in general may refer to parallel processing of the same workpiece, and/or to hand-over of a workpiece between collaborating production units.

It may be considered that the first workplan may be determined based on utilizing artificial intelligence, AI, in particular a symbolic AI and/or machine learning. This may provide the capacity for autonomy of the production unit. Symbolic AI may allow quick and determined results, with low processing requirement, and/or allow easy debugging. Machine learning may be based on big data and training, potentially broadening application and/or providing unexpected workplans.

The method may comprise executing, and/or operating based on, the workplan, or the first workplan, by the first autonomous production unit. Thus, behaviors or instructions may be implemented. In some cases, the method may comprise executing, and/or operating based on, the second workplan by the second production unit; the second workplan may be provided to the second production unit. The workplan may be executable by a production unit, and/or the production unit may be operable based on the workplan, at least partially, e.g., the part intended for the specific unit, e.g., the first workplan by the first unit, the second workplan by the second unit. This may be based on formatting and/or translating the workplan into an executable form.

There is also proposed an autonomous production unit for a manufacturing system. The autonomous production unit is adapted to perform a method of operating a first autonomous production unit as described herein. The autonomous production unit may be a first autonomous production unit as described herein. It may be considered that the autonomous production unit may comprise processing circuity, and/or one or more communication interfaces (e.g., to a control device of the manufacturing system, and/or to one or more production units, e.g., of the same cell, and/or to one or more sensors). The processing circuity may be adapted to, and/or suitable to perform the method, e.g., based on a computer program product as described herein.

The manufacturing system may comprise a plurality of autonomous production units as described herein, in particular a plurality of first autonomous production units.

In some cases, the manufacturing system may be operated on, and/or may provide, and/or may determine, an operation plan based on a compilation of workplans. The workplans (e.g., comprising first and/or second workplans) may be determined and/or provided by a plurality of (first) autonomous production units, e.g., via suitable interfaces. The operation plan may be considered a workplan for multiple autonomous production units. The production unit/s associated to the same cell may be indicated by, and/or configured by, the manufacturing system, and/or a control device (which may be a computer system) of the manufacturing system. Alternatively, or additionally, this may be configured manually. A production unit may be part of more than one cell.

There is considered a computer program product comprising instructions (e.g., computer-executable instructions) causing processing circuitry and/or a computer system to perform a method as described herein, e.g., when executed on or by the processing circuitry and/or computer system. The computer system may be a control device of the autonomous production unit as described herein, and/or may comprise processing circuitry.

A storage medium storing a computer program product as described herein is also described.

In general, different representations, e.g., domain representation and/or state representation and/or problem representation, may be in separate information containers and/or files and/or data sets; however, they may be combined, e.g., in the same file and/or data set and/or information container. A workplan of actions may be represented by, and/or implemented as a workplan or workflow of behaviors. In general, a workplan may indicate and/or instruct behaviors and/or action for a production unit. A representation, e.g., the domain representation and/or state representation and/or problem representation,, may be provided, and/or may be, in a planning language (e.g., PDDL, NDDL, MAPL, OPT, PPDDL, or similar) and/or may be machine-readable or computer-readable.

A production unit may in general be considered to be autonomous if it is adapted to determine its own workplan, e.g., as described herein, and/or is adapted for independent operation, e.g., based on generalized information (without specific instructions for actions to be performed in a processing step).

The method may especially be carried out, completely or in part, by electronic execution means like a computer system and/or processing circuitry of an autonomous production unit. To these ends, the method may be formulated as a computer program product with program code means and/or instructions. The above-described system may comprise the computer system. Advantages or features of the method may apply to the method and vice versa.

### Brief Summary of the Enclosed Figures

The above-described properties, features and advantages of present invention as well as the way they are achieved will be made clearer and better understandable in the light of the following discussion, making reference to exemplary embodiments shown in accompanying figures, in which
- Figure 1: shows an exemplary behavior representation used by the invention;
- Figure 2: shows an exemplary approach of determining a workplan according to the invention;
- Figure 3: shows an exemplary first scenario; and
- Figure 4: shows an exemplary second scenario.

### Detailed Exemplary Embodiments of the Invention

Intelligent Cyber Physical Systems (I-CPS) as core technologies of Industry 4.0 seem to be promising for making more adaptable and flexible production systems. A Cyber Physical Production System (CPPS) may be considered to comprise a network of smart (e.g., autonomous) production units. A production unit may be adapted to make decisions autonomously, and/or to be self-adaptive to changes in production environment and tasks. A preferred control architecture in such systems is "autonomous" rather than "automatic". Therefore, it may be not necessary to preprogram a production unit like a smart Cyber Physical Production Unit (CPPU) for every specific production task.

Autonomy in modern cyber physical production systems with multi-functional and mobilized units as well as dynamic production paths may be considered of great importance.

An approach for autonomous control of machines in cyber physical production systems and/or production units is proposed. Using this approach, smart CPPUs can plan "collaboratively" to realize a given production task based on the knowledge of the current state of the system and the environment. The behavior of smart CPPUs may be considered emergent rather than preprogrammed.

To manufacture or handle or manage a product, a production process consisting of production steps and their ordering constraints may be given to the system. The system then may execute the production steps according to the process to produce a product.

One goal of the invention may be considered to autonomously plan and perform a production step which is given inside the production process. The production step may be planned for a cell of autonomous production units adapted to collaborate for performing the production step. Individual production steps may be performed by different cells, e.g., in parallel or serially or sequentially e.g., with handover of a workpiece between cells and/or production steps.

In general, a workpiece may be considered a (physical) object, or multiple objects (e.g., different components to be combined), undergoing a form of processing and/or manufacturing and/or treatment to be turned into a product, e.g., within a production process and/or one or more production steps. A product may be considered the intended result of a production process; it may be indicated as (manufacturing) target and/or goal and/or final or intended product, or simply product. An intermediate product may be considered to represent the result or intended result of a processing step and/or handling of a cell (of production units), which may have to undergo further processing to arrive at the product. However, for ease of reference, a product may be considered an intermediate product, e.g., in the context of processing for a cell performing the last processing step of a process.

Processing steps may operate on a workpiece, which may be considered to represent different intermediate products during different processing steps, and may be handed over between production units and/or cells for different processing steps. A processing step may in general refer to a processing of a workpiece to provide an intermediate product (and/or final product). A processing step may comprise multiple actions by one or more production units, e.g., autonomous production units.

An autonomous production unit may for example be stationary, or mobile. An autonomous production unit may be represented by, and/or implemented as, a CPPU and/or a robot and/or machine. It may be adapted to perform one or more actions, and/or providing associated functionality.

It may be assumed that machines do not need to be preprogrammed specifically to execute a production step, but may provide a workplan for themselves and/or dynamically; corresponding machines or production units may be considered autonomous.

In general, a functionality (e.g., for and/or provided by a production unit like an autonomous production unit) may be referred to, and/or represented (e.g., for digital or electronic processing) as behavior. The functionality and/or behavior may be unspecified, e.g., in terms of needing parametrization to be executable and/or to be provided by the production unit; an executed or executable behavior may be considered an action, it may be sufficiently parametrized to be performable or executable as physical action.

A behavior and/or the functionality may represent and/or pertain to a mechanical and/or kinetic and/or physical action, e.g., involving some kind of movement, and/or application of material, and/or electricity, and/or force, and/or pressure, and/or suction, and/or momentum. A functionality may be provided by, and/or associated to, a component of a production unit. Example components may comprise a gripper or gripping arm, a controllable hose, a screwdriver, a pickup unit, a welding torch, etc. Example functionalities of a production unit may comprise welding, and/or picking up, and/or moving, putting in a screw or removing a screw, and/or painting, and/or coating, and/or applying power or electricity, and/or galvanizing, and/or rotating a workpiece, and/or moving into a default position and/or initial position and/or reference position.

Behavior may pertain to simple (e.g., linear or rotational or one-dimensional) action, or to a complex action, e.g., involving multiple dimensions, and/or combination of simple actions. A behavior may describe a possible action or range of possible actions and/or a plurality of possible actions (e.g., different movements of a robot arm). It may be considered that a behavior may offer and/or require input like parametrization (e.g., input of one or more parameters or parameter values), in particular to provide and/or be implementable as an executable action. A behavior may be represented by one or more programs and/or functions and/or modules to control a physical device, and may be applicable to various production tasks; a behavior may be provided with related parameter values to become executable (as an executable action).

In general, a behavior may be considered generic and/or nonspecific to one or more task, or to any task, and/or non-executable without further input, e.g., parametrization. A behavior may comprise, and/or be represented by, and/or implemented by, code (e.g., computer-executable code), and/or one or more programs or program parts and/or functions and/or modules and/or APIs (Application Programming Interface). A production unit may be provided with, e.g., preprogrammed with one or more behaviors, and/or associated functionalities. A functionality may generally be associated to and/or provided by a movable and/or adaptable physical part of the production unit. A behavior may be adapted to control, and/or cause, the production unit to perform and/or execute the action.

A production unit may provide, and/or be adapted for, "generic" and/or "parametrized" functionalities, e.g., according to and/or represented by one or more behaviors.

Parametrization may represent input for behavior, e.g., parameter value/s. The value/s and/or parametrization may be based on, and/or represent, a task specification, and/or a specific action to be carried out, and/or enable carrying out the behavior according to the input, e.g., to execute an action.

A task specification may describe and/or parametrize a task, and/or a product and/or work result, and/or initial state. A task and/or task specification may indicate and/or be associated to and/or comprise and/or be implementable and/or be executable based on one or more actions, e.g., sequential and/or simultaneous actions by one production unit, or by more than one production units working in combination.

A production unit may be a separately operable equipment or device, which may have its own control device and/or is adapted to provide a set of functionalities and/or behaviors. A production unit in general may comprise one or more components, and/or may comprise a control device and/or processing circuitry, which may be adapted to control operation of the autonomous production unit. It may comprise one or more interfaces for communication, e.g., with one or more other production units, and/or other parts of a manufacturing system, in particular a control system thereof. The production unit may be adapted to receive, e.g., via one of the interfaces, a problem representation, which may in particular represent and/or indicate a workpiece and/or a product and/or an intermediate product and/or goal, e.g., to be processed by the production unit or a cell the production unit is associated to. Different production units may be physically different units; different production units may have different functionalities, or the same functionalities, within the same call, or within different cells.

A cell of production units may comprise one or more production units. The production units may be associated to each other, and/or be arranged and/or adapted to collaborate, e.g., for performing a production step. A cell may comprise at least one, or two or more, autonomous production units.

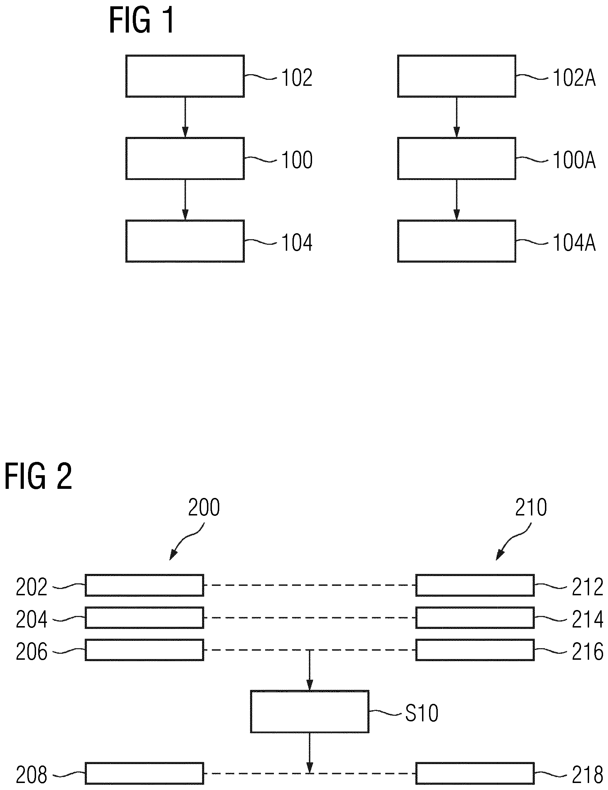

Referring to Figure 1, on the left-hand side, there is shown an exemplary scenario of utilizing a behavior 100 of a production unit like an autonomous production unit, e.g., implemented as and/or comprising generic (e.g., not fully parametrized and/or not executable) control code and/or program or program part (e.g., function). In general, a parametrization and/or input 102 may be provided to or for, and/or combined with, and/or input in, behavior 100. Parametrization 102 may be based on and/or represented by, and/or representative of, a task specification. The parametrized behavior may perform and/or execute a combined or synthesized control 104, which may be considered specific to the task, and/or be executable, and/or be based on the task specification. In one example illustrated on the right-hand side of Figure 1, a behavior may correspond to a move action ("move") for a robot arm 100A of a production unit, e.g., a robot. The parametrization may comprise a one or more movement parameters, e.g., target position and/or orientation and/or starting position and/or orientation of the robot arm, and/or one or more waypoint positions and/or orientations of the robot arm (e.g., to be traversed to the target position), and/or a model of the environment (e.g., 3-dimensional, 3D, or 2D) 102A. The resulting executable action or behavior 104A may be a specific movement of the robot arm, e.g., to achieve a goal or target for the production unit.

By providing target position and orientation as well as location of objects in the environment, "move" may first be computed, and then execute a collision free motion trajectory for the robot arm.

To realize a production step, a composition or combination of behaviors with corresponding parameter values may be required, e.g., utilizing one or more production units, e.g., of a cell of production units.

It is proposed using a planning technique like an AI planning technique to generate a workflow of behaviors (or workplan of actions) for performing a production step autonomously. The planning or determining of a workplan or workflow may involve generating a sequence of actions to achieve a goal considering the current state of the system and environment.

A planning language may be used to specify the knowledge of the system, e.g., in a domain specification. This may include the current state of the system (e.g., of the cell to perform the processing step) and/or environment, and/or possible actions, constraints, assumptions, and the desired target state. A planning algorithm may then be used to search for, and/or determine a sequence of actions or behaviors that transform the current state into the desired goal or target state.

Different planning frameworks may provide different languages for expressing the knowledge of the system. Logic-based planners may use formal logic such as Boolean logic or Ontology (based on Description Logic) for knowledge representation. In this type of planning, knowledge is represented using a set of logical statements and a valid and usually optimal plan is generated using inference rules and logical reasoning. Logic-based planners may be implemented as, and/or based on, an artificial intelligence (AI). Such an AI may be represented as and/or referred to as a symbolic AI.

Figure 2 shows an example of the invention. Determining a workflow or workplan may be considered a planning problem, e.g., for realization of a production step by using (generic) behaviors, to be performed by one or more production units, e.g., those of a single cell. The knowledge about the system 200 (left-hand side of Figure 2) may be represented in a digital representation 210, e.g., expressed in a machine-readable format (right-hand side of Figure 2), e.g., a planning language. The knowledge 200 may include a goal 202 (e.g., the processing step, and/or target of the processing step), which may find its correspondence in a problem definition 210 (also referred to as problem representation and/or problem specification), for example representing, and/or based on, a BOP (Bill of Processing, which may be supplied to a system). A BOP may indicate a product and/or product characteristics; it may also indicate initial material/s or input, and/or intermediate products, and/or one or more processing steps.

Knowledge about functionality provided by the cell and/or the production units 204, e.g., available actions, may find their correspondence in a behavior representation 214, which may be part of a domain specification.

A current state of the system (e.g., cell) and/or environment 206 may be represented by a state representation, e.g., as digital twin of a product and/or production units 216 (e.g., in a domain specification, or a state specification). The current state may, in particular, represent position/s of production units and/or associated components and/or workpiece and/or material (e.g., position of an arm), and/or movement and/or load on component/s. The current state and/or digital twin/s may be based on parameters (e.g., settings of activators or components of one or more production unit/s), and/or sensor information, e.g., provided by sensors of the production unit/s and/or the cell and/or external sensors, e.g., arranged to monitor, e.g., using sensing based on electromagnetic waves, e.g., infrared and/or optical and/or radar and/or microwave and/or laser. The sensors may comprise suitable sensing equipment (e.g., camera, transmitter and/or receiver) and/or communication interface/s.

Determining (S10) a workplan may be performed based on information 200 and/or 210. In general, it may be based on a domain specification, which may in particular represent and/or include and/or be based on the behaviors 214 and/or associated constraints and/or relations, e.g., as predicates for a symbolic logic approach. The determined workplan may represent a sequence of actions 208, e.g., to achieve the goal 202, and/or a workflow of behaviors 218 (which may be mapped or mappable to a sequence of actions 208). The determined workplan may pertain to one or more production units (indicating or instructing behaviors and/or action to be performed by the unit/s), and/or may in particular comprise a first workplan for a first (autonomous) production unit; it may also comprise a second workplan for a second (autonomous) production unit; the workplan may comprise more than two component workplans, each of which may be associated to a different production unit (which may all be part of the same cell) .

In general, the domain specification, and/or problem representation or specification, may include information representing a current state 206, e.g., based on a digital twin 216; in some cases, current state 206 may be represented in as separate state specification. State information, e.g., in a domain specification and/or state specification, may include and/or comprise and/or represent and/or be based on digital twins of production units as well as digital twin of product (and/or workpiece). The digital twin of a production unit may comprise and/or indicate and/or represent, for example, available behaviors, physical connections to other units, constraints, and current state. The digital twin of the product may comprise and/or indicate and/or represent physical and/or geometrical characteristics of the product such as weight, material, bounding box dimensions or center of mass, as well as the specification of production steps and/or actions or functionality such as input and output parts (e.g., screws to be obtained and to be set into a workpiece).

It may be considered that certain parts of the knowledge 200 may be relatively static in time. For example, the available behaviors of production units may be considered constant in many cases. However, goals (e.g., target product) may change quickly, e.g., from product to product (or even from production step to the next step to be performed by the same cell and/or production unit), e.g., when there is a switch to a different product and/or change (e.g., error) in the cell or environment, and/or in the context of small lot numbers (e.g., lot number=1, or an integer smaller than 10 or smaller than 5). The associated representation (e.g., as part of representation 210) may be updated accordingly, e.g., via suitable interfaces. Such update, in particular an update of a goal or problem representation 212, and/or occurrence of an error may trigger an action S10 of determining the workplan anew.

The generated workflow or workplan 208, 218 may need collaboration of several units. To illustrate the idea, a logic-based planner and a planning language named PDDL (Planning Domain Definition Language) for knowledge representation may be used.

In PDDL, the knowledge may be represented by specifying a domain definition, as well as problem definition. The domain definition may contain predicates specifying definition of types of objects or the relations between objects and actions with parameters, preconditions, and effects. The problem definition may specify the goal of the task (e.g., product) and/or initial state like instances of types and initial values of predicates. As a toy example, let production step be "Fasten 4 screws" on a part. The part has 4 holes, and 4 screws should be fastened to the holes. Two different scenarios for planning this production step are provided.

In one scenario, a cell with two UR3 robots is assumed. For a robot, the behaviors move, pick, place, and screw are available. Robots have screwdrivers as their tools, therefore, pick and place implicitly refer to picking and placing a screw by a screwdriver. However, each robot can only reach two holes of the part. Therefore, collaboration of two robots is needed. For two UR3 robots, the domain definition contains objects of type SCREW, ROB-TOOL, and POS (i.e., position). The relations are, for example, screw is fastened to a hole, a position is reachable by a robot-tool, or a robot-tool is carrying an object. Robot behaviors such as move, or screw are represented by actions. The domain definition in PDDL is as follows: (in PDDL '?' specifies a parameter or variable.)

```
 (define (domain domain _two_UR3s)
    (:predicates (POS ?x) (SCREW ?s) (ROB-TOOL ?t)
                  (fastened-screw ?s ?h) (free ?t) (carry ?t
                 (at-rob-tool ?x ?t) (reachable ?x ?t)
                 (at-object ?x ?o))
 
    (:action move :parameters (?x ?y ?t)
     :precondition (and (POS ?x) (POS ?y)
                         (ROB-TOOL ?t)
                       (at-rob-tool ?x ?t)
                      (reachable ?y ?t))
     :effect (and (at-rob-tool ?y ?t)
                      (not (at-rob-tool ?x ?t))))
 
    (:action pick :parameters (?x ?s ?t)
     :precondition (and (POS ?x)
                    (SCREW ?s)
                    (ROB-TOOL ?t)
                    (at-object ?x ?s)
                    (not (fastened-screw ?s ?x))
                  (free ?t)
                  (at-rob-tool ?x ?t))
     :effect (and (carry ?t ?s)
               (not (free ?t))))
 
    (:action place :parameters (?x ?y ?s ?t)
          :precondition (and (POS ?x)
                         (SCREW ?s)
                       (ROB-TOOL ?t)
                         (at-object ?x ?s)
                       (carry ?t ?s)
                       (at-rob-tool ?x ?t)
                       (reachable ?y ?t))
          :effect (and (not (carry ?t ?s))
                        (free ?t)
                        (at-object ?y ?s)
                        (at-rob-tool ?y ?t)
                        (not (at-rob-tool ?x ?t))
                        (not (at-object ?x ?s))))
 
    (:action screw :parameters (?t ?s ?h)
     :precondition (and (SCREW ?s)
                         (POS ?h)
                      (ROB-TOOL ?t)
                      (at-rob-tool ?h ?t)
                      (at-object ?h ?s)
                      (not (carry ?t ?s)))
     :effect (and (fastened-screw ?s ?h)))
    )
```

As problem definition, in the example, the goal is fastening 4 screws, the objects are instances of POS, SCREW and ROBOT-TOOL with initial values of predicates specifying relations between objects. For example, screw-driver-1 and screw-driver-2, which belong to robot1 and robot2, are of type ROBOT-TOOL and are initially at positions home1 and home2, respectively. Moreover, there are four instances of type SCREW, namely, screw1, screw2, screw3, and screw4 with initial positions s1, s2, s3, and s4. Similarly, there are four holes (part-hole1, part-hole2, part-hole3, and part-hole4) which are modeled as instances of POS. The problem definition in PDDL is as follows:

```
 (define (problem problem_two_UR3s)
    (:domain domain_two_UR3s)
    (:objects screw1 screw2 screw3 screw4
              part_hole1 part_hole2 part_hole3 part_hole4
            screw_driver_1 screw_driver_2
            home1 home2
            s1 s2 s3 s4)
 
    (:init (SCREW screw1) (SCREW screw2) (SCREW screw3)
 (SCREW screw4)
             (ROB-TOOL screw_driver_1) (ROB-TOOL
             screw_driver_2)
            (POS part_hole1) (POS part_hole2) (POS
            part_hole3) (POS part _hole4)
             (POS home1) (POS home2)
             (POS s1) (POS s2) (POS s3) (POS s4)
 
          (at-rob-tool home1 screw_driver_1)
          (at-rob-tool home2 screw_driver_2)
          (at-object s1 screw1) (at-object s2 screw2)
          (at-object s3 screw3) (at-object s4 screw4)
 
          (reachable part_hole1 screw_driver_1) (reachable s1
          screw_driver_1)
          (reachable home1 screw_driver_1)
          (reachable part_hole2 screw_driver_1)
           (reachable s2 screw_driver_1)
 
             (reachable part_hole3 screw_driver_2) (reachable
             s3 screw_driver_2)
             (reachable home2 screw_driver_2)
          (reachable part_hole4 screw_driver_2) (reachable s4
          screw_driver_2)
 
          (free screw_driver_1) (free screw_driver_2))
    (:goal (and (fastened-screw screw1 part_hole1)
                 (fastened-screw screw2 part_hole2)
                 (fastened-screw screw3 part_hole3)
                 (fastened-screw screw4 part_hole4)
                 (at-rob-tool home1 screw_driver_1)
                 (at-rob-tool home2 screw_driver_2)))
     )
```

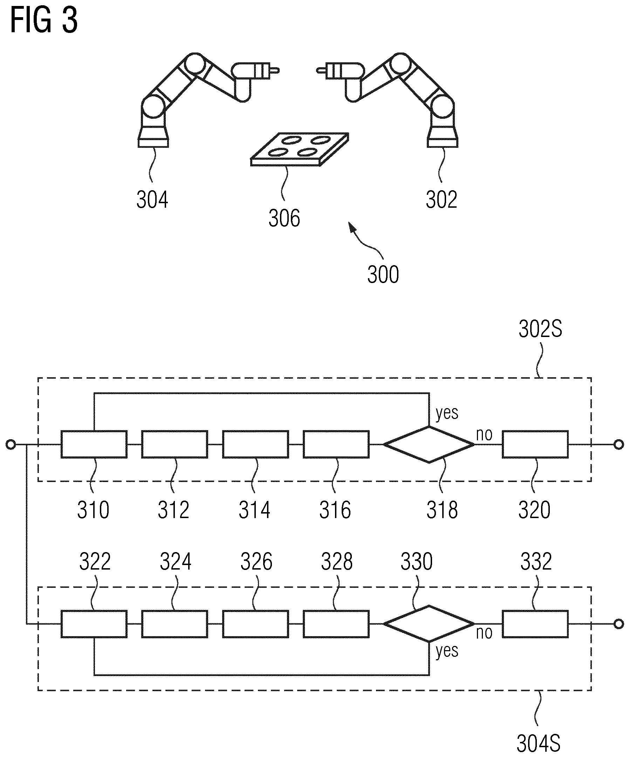

The (work) plan generated from, and/or determined based on, domain and problem definitions of two UR3 is shown in Figure 3. The generated plan contains behaviors required for the collaboration of two UR3 robots to fasten 4 screws on the part. screw-driver-1 of robot1 fastens screw1 and screw2 to part-hole1 and part-hole2 which are reachable to it. Similarly, screw-driver-2 of robot2 fastens the remaining screws.

Figure 3 shows a workflow based on the dependencies between the individual steps. A cell 300 comprises robots robot1 302 and robot2 304, to perform the production step of fastening 4 screws to workpiece 306. Each screw behavior depends on the sequence of moving, picking and placing of a screw to the corresponding part-hole. When a screwdriver finishes, the robot may return to the home position. A workplan 302S for robot 302 may be provided, as well as a workplan 304S for robot 304. The workplans may comprise behaviors and/or actions of move 310, 322, pick (of a screw) 312, 324, place 314, 326, and screw 316, 328. Depending on whether more screws are available 318, 330, there may be a returned to moving 310, 322, or move to initial state 320, 332. In this scenario, the workplans 302S and 304S may be executed in parallel, with no explicit interaction or collaboration between the robots 302, 304. Accordingly, the robots 302, 304 could be in separate cells.

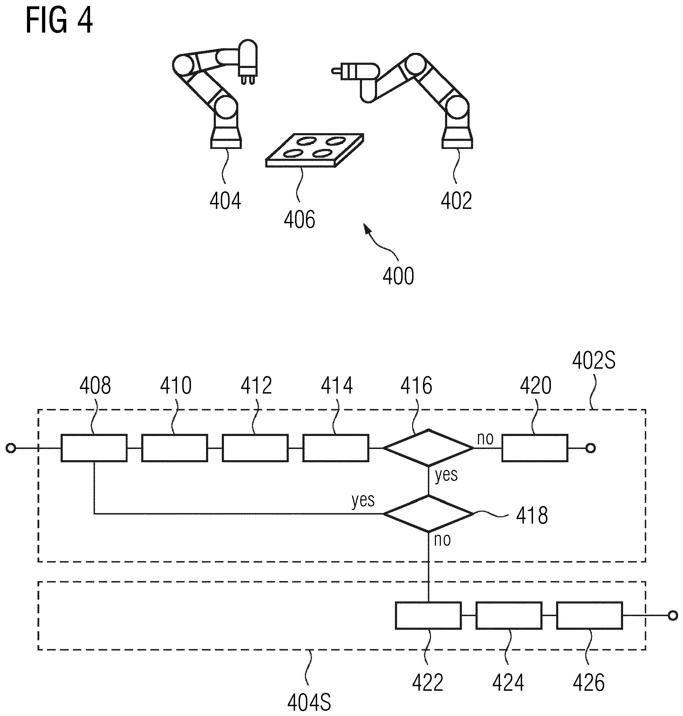

In the second scenario, a workplan as shown in Figure 4 may be determined. As shown in Figure 4, a cell 400 may be assumed, with one robot UR3 402 and one robot2 (e.g., a Kuka robot) 404, which does not provide a screw functionality. Robot 404 has a gripper as the tool, and has *move* and *reorient* behaviors. Reorient behavior is for rotating the part to make unreachable holes reachable for robot 402.

Similar to previous scenario, the knowledge is represented as domain and problem definitions in PDDL. In the domain definition, a new type for the part (PART) is provided, and also new relations like a part-hole belongs to a part. The PDDL code for domain definition of this scenario is given in the following:

```
 (define (domain domain_ur_kuka)
    (:predicates (POS ?x) (SCREW ?s) (ROB-TOOL ?t) (PART ?p)
              (fastened-screw ?s ?h) (free ?t) (carry ?t ?p)
          (at-rob-tool ?x ?t) (reachable ?x ?t) (at-object ?x
          ?o)
          (belong-to ?e ?p) (not-equal ?a ?b))
    (:action move :parameters (?x ?y ?t)
      :precondition (and (POS ?x) (POS ?y) (ROB-TOOL ?t)
              (at-rob-tool ?x ?t) (reachable ?y ?t))
      :effect (and (at-rob-tool ?y ?t) (not (at-rob-tool
      ?x ?t))))
    (:action reorient :parameters (?x ?p ?t1 ?t2 ?x1 ?x2 ?y1
    ?y2)
        :precondition (and (POS ?x) (POS ?x1) (POS ?x2) (POS
        ?y1) (POS ?y2)
                            (ROB-TOOL ?t1) (ROB-TOOL ?t2)
 (PART ?p)
                  (belong-to ?x1 ?p) (belong-to ?x2 ?p)
                  (belong-to ?y1 ?p) (belong-to ?y2 ?p)
                  (not-equal ?x1 ?x2) (not-equal ?y1 ?y2)
                  (not-equal ?x1 ?y1) (not-equal ?x1 ?y2)
                  (not-equal ?x2 ?y1) (not-equal ?x2 ?y2)
                  (at-object ?x ?p) (at-rob-tool ?x ?t1)
                  (free ?t1)
                  (reachable ?x1 ?t2) (reachable ?x2 ?t2)
                  (not (reachable ?y1 ?t2))
                               (not (reachable ?y2 ?t2)))
      :effect (and (reachable ?y1 ?t2) (reachable ?y2
      ?t2)
                  (not (reachable ?x1 ?t2)) (not (reachable ?x2
                  ?t2))))
    (:action pick :parameters (?x ?s ?t)
      :precondition (and (POS ?x)
                     (SCREW ?s)
                     (at-object ?x ?s)
                     (not (fastened-screw ?s ?x))
             (ROB-TOOL ?t)
             (free ?t)
             (at-rob-tool ?x ?t))
      :effect (and (carry ?t ?s) (not (free ?t))))
    (:action place :parameters (?x ?y ?s ?t)
          :precondition (and (POS ?x)
                         (SCREW ?s)
                         (at-object ?x ?s)
                 (ROB-TOOL ?t)
                 (carry ?t ?s)
                 (at-rob-tool ?x ?t)
                 (reachable ?y ?t))
          :effect (and (not (carry ?t ?s))
                        (free ?t)
                        (at-object ?y ?s)
                        (at-rob-tool ?y ?t)
                        (not (at-rob-tool ?x ?t))
                        (not (at-object ?x ?s))))
    (:action screw :parameters (?t ?s ?h)
      :precondition (and (SCREW ?s)
                          (POS ?h)
                  (ROB-TOOL ?t)
              (at-rob-tool ?h ?t)
              (at-object ?h ?s)
              (not (carry ?t ?s)))
      :effect (and (fastened-screw ?s ?h))))
```

In the problem definition, there is defined screw-driver-1 and gripper as objects of type ROBOT-TOOL. Here, again only two holes are reachable by UR3, but Kuka 404 can rotate the part to make the other holes reachable for fastening. The PDDL code for problem definition is as follows:

```
 (define (problem problem_ur_kuka)
    (:domain domain_ur_kuka)
    (:objects screw1 screw2 screws screw4
          part_hole1 part_hole2 part_hole3 part_hole4 part
  screw_driver_1 gripper
  home1 home2
  s1 s2 s3 s4 p)
    (:init (SCREW screw1) (SCREW screw2) (SCREW screw3)
 (SCREW screw4)
             (ROB-TOOL screw_driver_1) (ROB-TOOL gripper)
             (PART part)
             (belong-to part_hole1 part)(belong-to part_hole2
             part)
             (belong-to part_hole3 part)(belong-to part_hole4
             part)
             (not-equal part_hole1 part_hole2)
             (not-equal part_hole1 part_hole3)
             (not-equal part_hole1 part_hole4)
             (not-equal part_hole2 part_hole3)
             (not-equal part_hole2 part_hole4)
             (not-equal part_hole3 part_hole4)
             (POS part_hole1) (POS part_hole2) (POS
             part_hole3)
             (POS part_hole4) (POS home1) (POS home2)
             (POS s1) (POS s2) (POS s3) (POS s4) (POS p)
     (at-rob-tool home1 screw_driver_1)
             (at-rob-tool home2 gripper)
     (at-object s1 screw1) (at-object s2 screw2)
             (at-object s3 screw3) (at-object s4 screw4) (at-
             object p part)
     (reachable part_hole1 screw_driver_1)
             (reachable s1 screw_driver_1)
     (reachable home1 screw_driver_1)
     (reachable part_hole2 screw_driver_1)
             (reachable s2 screw_driver_1)
     (reachable s3 screw _driver_1) (reachable s4
     screw_driver_1) (reachable part_hole1 gripper) (reachable
     part_hole2 gripper)
             (reachable part_hole3 gripper) (reachable
             part_hole4 gripper)
             (reachable home2 gripper)(reachable p gripper)
 (free screw_driver_1) (free gripper))
    (:goal (and (fastened-screw screw1 part_hole1)
                 (fastened-screw screw2 part_hole2)
                 (fastened-screw screw3 part_hole3)
                 (fastened-screw screw4 part_hole4)
                 (at-rob-tool home1 screw_driver_1)
                 (at-rob-tool home2 gripper))))
```

The plan generated for collaboration of robots 402 and 404 using the problem and domain definitions in PDDL is shown in Figure 4. After fastening the screws to holes which are reachable by robot 402, robot 404 reorients the part so that the other two holes become reachable for fastening by robot 402, when the plan is executed.

The collaboration of robots 402 and 404 to handle workpiece 406 is illustrated in Figure 4, as workflows based on the dependencies between behaviors. A workplan 402S for robot 402 may comprise move 408, pick 410, place 412, screw 414 (which are also provided by robots 402, 404 of the first scenario). If in 416 more screws may be need, in 418 it may be branched back to move 408 if screws or holes are reachable, if not it may be handed over to workplan 404S. If no more screwing is needed, it may be branched to move 420, e.g., to return to an initial position. The workplan may include waiting for a specific event (e.g., reorient) of workplan 404S, before performing a specific action, e.g., moving or placing a screw. In workplan 404S for robot 404, actions or behaviors move 422, reorient 424, and move 426 (e.g., to an initial position) may be indicated. Reorient by robot 404 may happen after fastening screws to holes which are reachable by robot 402, such that other holes are reachable by robot 402 after reorientation (rotation of the workpiece 406).

One production step may be planned and executed differently based on the current state of the system and environment, e.g., a cell. In the examples given above, a central planning is demonstrated using the knowledge of the entire system/cell. However, in a distributed setting, each robot can plan locally using its local knowledge and then a global plan can be agreed upon by communicating local plans.

The development of autonomous cyber physical production systems which can translate high-level task descriptions (production step) to appropriate actions of machines (behaviors) is proposed. Using the knowledge of the system and environment, autonomous production units may plan for achieving their goals. Autonomous production units or cyber physical production systems as proposed in this invention provide flexibility and adaptability to changes in the environment and tasks (goals), with low time delay. The effort currently needed for reengineering and recommissioning in traditional production systems may be significantly reduced. Also, challenges involved in manufacturing highly customized products in small batches (lot size 1) and rapid changes in customer needs and market may be adapted to easily.

An electronic device, and/or autonomous production unit and/or a computer system may comprise processing circuitry, and/or a computer system and/or processing circuitry may comprise one or more computers, and/or may comprise one or more components and/or may be a distributed system, e.g., interconnected via suitable communication interfaces. Different components may perform different actions, e.g., based on exchanging information via the interface/s. A computer system in general may be and/or comprise one or more computers and/or controllers and/or processing circuitries.

The proposed method may especially be carried out, completely or in part, by electronic execution means like a computer system. To these ends, the method may be formulated as a computer program product with program code means (e.g., instructions, which may in general be computer-readable and/or computer-executable). The above-described system may comprise the computer system. Advantages or features of the method may apply to the method and vice versa.

In general, circuitry may comprise integrated circuitry. Integrated circuitry or processing circuitry (which may be considered a form of circuity) may comprise one or more processors and/or controllers (e.g., microcontrollers), and/or ASICs (Application Specific Integrated Circuitry) and/or FPGAs (Field Programmable Gate Array) and/or SOCs (System-on-a- Chip), or similar. It may be considered that processing circuitry comprises, and/or is (operatively) connected or connectable to one or more memories or memory arrangements or storage media, which may be non-transitory. A storage medium or memory arrangement may comprise one or more memories.

A memory or storage medium may be adapted to store digital information. Examples for memories or a storage medium may comprise volatile and non-volatile and/or non-transitory memory, and/or Random Access Memory (RAM), and/or Read-Only-Memory (ROM), and/or magnetic and/or optical memory, and/or flash memory, and/or hard disk memory, and/or EPROM or EEPROM (Erasable Programmable ROM or Electrically Erasable Programmable ROM). Integrated circuitry may in general provide a set of instructions; the instructions provided may be called and/or used, and/or be available for calling and/or using, e.g., when executing an application and/or processing input, e.g., to provide an output.

Even though present invention has been illustrated and explained in detail above with reference to the preferred embodiments, the invention is not to be construed as limited to the given examples. Variants or alternate combinations of features given in different embodiments may be derived by a subject matter expert without exceeding the scope of present invention.

Independent of the grammatical term usage, individuals with male, female or other gender identities are included within the term.

## Claims

1. Method of operating a first autonomous production unit (302, 304, 402, 404) for a manufacturing system, the first autonomous production unit (302, 304, 402, 404) being adapted to provide a plurality of different functionalities, the method comprising determining (S10), by the first autonomous production unit (302, 304, 402, 404), a first workplan of actions to be performed by the first autonomous production unit (302, 304, 402, 404), wherein the first workplan is determined based on a domain representation and based on a problem representation.

2. Method according to claim 1, wherein the domain representation represents the first autonomous production unit (302, 304, 402, 404), and/or functionalities of the first autonomous production unit (302, 304, 402, 404), and/or constraints of the first autonomous production unit (302, 304, 402, 404), and/or represents one or more objects, and/or represents an environment, and/or on or more relations between such functionalities and/or constraints and/or objects and/or the environment.

3. Method according to one of the preceding claims, wherein the first workplan is determined based on a representation of a second production unit (302, 304, 402, 404) operable to collaborate with the first autonomous production unit (302, 304, 402, 404).

4. Method according to one of the preceding claims, wherein the method comprises determining a second workplan of actions for a second production unit (302, 304, 402, 404) operable to collaborate with the first autonomous production unit (302, 304, 402, 404).

5. Method according to one of the preceding claims, wherein the first workplan is determined dynamically.

6. Method according to one of the preceding claims, wherein the first workplan is determined based on arrival of a workpiece (306, 406) to be handled by the first autonomous production unit (302, 304, 402, 404) and/or by an error when handling a workpiece (306, 406).

7. Method according to one of the preceding claims, wherein the first workplan is determined based on state information pertaining to first autonomous production unit (302, 304, 402, 404).

8. Method according to one of the preceding claims, wherein the first autonomous production unit (302, 304, 402, 404) is associated to a cell (300, 400) of M different production units (302, 304, 402, 404) operable to collaborate at least pairwise, wherein M is an integer number larger than 1.

9. Method according to one of the preceding claims, wherein the first workplan is determined (S10) based on utilizing artificial intelligence, AI, in particular a symbolic AI and/or machine learning.

10. Method according to one of the preceding claims, wherein the method comprises executing, and/or operating based on, the first workplan, by the first autonomous production unit (302, 304, 402, 404).

11. Autonomous production unit (302, 304, 402, 404) for a manufacturing system, the autonomous production unit (302, 304, 402, 404) being adapted to perform a method according to one of the preceding claims.

12. Manufacturing system, the manufacturing system comprising a plurality of autonomous production units (302, 304, 402, 404) according to claim 11.

13. Manufacturing system according to claim 12, wherein the manufacturing system is operated on, and/or provides, an operation plan based on a compilation of workplans determined according to one of claims 1 to 10.

14. Computer program product, the computer program product comprising instructions causing processing circuitry and/or a computer system to perform a method according to one of claims 1 to 10.

15. Storage medium storing a computer program product according to claim 14.
